# EUROPEAN PATENT SPECIFICATION

(11) **EP 2 586 850 B1**
(45) Date of publication and mention of the grant of the patent: **25.04.2018**
(21) Application number: 11800688.1
(22) Date of filing: 22.06.2011
(51) Int. Cl.: C10B 39/02

(54) **COKE DRY QUENCHING PLANT AND METHOD FOR OPERATING SAME**
ANLAGE ZUR TROCKENLÖSCHUNG VON KOKS UND BETRIEBSVERFAHREN DAFÜR
INSTALLATION D'EXTINCTION À SEC DE COKE ET PROCÉDÉ POUR UTILISER CELLE-CI

(30) Priority: 27.06.2010 JP 2010145714
(43) Date of publication of application: 01.05.2013
(73) Proprietor: JP Steel Plantech Co., Kouhoku-ku Yokohama-shi Kanagawa 222-0033 (JP)
(72) Inventor: SEKIGUCHI, Takeshi, Yokohama-shi Kanagawa 221-0056 (JP); HAMASAKI, Naruo, Yokohama-shi Kanagawa 221-0056 (JP)
(74) Representative: Hoffmann Eitle
(86) International application number: PCT/JP2011/064280
(87) International publication number: WO 2012/002223

(56) References cited:
- GB-A- 2 018 965
- JP-A- S 591 590
- JP-A- 7 268 338
- JP-A- 8 073 861
- JP-A- 50 070 402
- JP-A- 59 093 790
- JP-A- 2004 231 688
- JP-B- 56 043 076
- US-A- 4 106 998

## Description

### [Technical Field]

The present invention relates to a coke dry quenching facility for cooling, by use of cooling gas, red-hot coke manufactured by a coke furnace, and also relates to a running operation method for the coke dry quenching facility.

### [Background Art]

A coke dry quenching facility (Coke Dry Quenching: CDQ) is a facility for cooling red-hot coke manufactured by a coke furnace. The facility includes a cooling tower into which a batch of red-hot coke is charged from above. A cooling gas (inactive gas) is supplied into the cooling tower containing the red-hot coke, and the red-hot coke is thereby cooled to a predetermined temperature. The coke thus cooled is continuously discharged from the bottom of the cooling tower. The cooling gas comes to have a high temperature due to heat exchange with the red-hot coke, and so the sensible heat and latent heat (combustible components) of the gas are recovered as steam by a waste heat recovery boiler. After the waste heat recovery, the cooling gas is circulated for reuse.

In a coke dry quenching facility of this kind, red-hot coke, which has been carried by a bucket, is charged into the facility by a charging device. At this time, since the furnace top lid is set open, part of the gas inside the cooling tower is replaced with the charged coke and is discharged to atmosphere along with powder dust through the charge port, thereby causing dust emission.

For example, Patent Document 1 discloses a technique for solving problems about the dust emission caused by the coke charging operation of this kind. According to the technique of the Patent Document 1, when red-hot coke, which has been carried by a bucket, is received by a hopper and is charged into the cooling tower, the dust emission is prevented as follows: The charge port is gas-sealed, and a dust collection hood is disposed below the hopper to cover the red-hot coke charge port along with the upper side of the cooling tower. The dust collection hood is connected through a dust collection duct to a dust collector, and the lower side of the dust collection hood and the upper side of the cooling tower are gas-sealed.

Patent Document 2 discloses a process for recovering superfluous circulating gas in a coke dry quenching process. Patent Document 3 discloses a fine adjustment of dissipation gas flow from a coke dry quencher.

### [Prior Art Documents]

### [Patent Documents]

[Patent Document 1]
   Jpn. Pat. Appln. KOKAI Publication No. 2006-265500
[Patent Document 2]
   GB-A-2 018 965
[Patent Document 3]
   JP S59 1590 A

### [Summary of Invention]

The technique of the Patent Document 1 described above can prevent dust emission due to outward diffusion of gas containing powder dust. In this technique, however, when red-hot coke is charged, exhaust gas having high temperature is emitted by that much along with powder dust from the cooling tower to the dust collection hood. This high temperature gas is exhausted while being supplied through the dust collection duct to the dust collector, and so the sensible heat of this exhaust gas cannot be effectively utilized.

An object of the present invention is to provide a coke dry quenching facility and a running operation method for the same, which can prevent generation of gas containing powder dust itself from being caused by a cooling tower when red-hot coke is charged into the cooling tower.

Aspects of the present invention are defined in claims 1 and 4. The dependent claims are directed to optional and preferred features.

According to a first aspect of the present invention, there is provided a coke dry quenching facility for cooling, by use of cooling gas, red-hot coke manufactured by a coke furnace, the facility comprising a cooling tower including a charge port for charging the red-hot coke on an upper side of the cooling tower and a pressure gauge disposed at the upper side of the cooling tower to obtain a value of pressure inside the cooling tower, the cooling tower being configured to cool the red-hot coke charged therein; a furnace top lid configured to open and close the charge port; a gas circulation passage configured for gas including the cooling gas to be circulated, the gas circulation passage including a cooling gas flow passage, through which the cooling gas flows toward the cooling tower, and a high temperature gas flow passage, through which high temperature gas flows, the high temperature gas being generated by heat exchange of the cooling gas with the red-hot coke inside the cooling tower; a circulation mechanism configured to circulate the gas through the gas circulation passage; a waste heat recovery boiler disposed in the gas circulation passage and configured to recover heat of the cooling gas having a high temperature due to heat exchange with the red-hot coke; and an adjustment mechanism configured to adjust a supply amount and a discharge amount to and from circulation gas circulated through the cooling tower and the gas circulation passage, the adjustment mechanism including an air injection mechanism configured to inject air into the high temperature gas flow passage to burn combustible components of the high temperature gas and thereby further increase temperature of the high temperature gas, and a cooling gas discharge mechanism configured to discharge part of the cooling gas from the cooling gas flow passage of the gas circulation passage, wherein the air injection mechanism is provided with a flow rate adjustment valve for controlling air injection amount and a first flow meter for obtaining a value of the air injection amount, and the cooling gas discharge mechanism is provided with a valve for adjusting gas discharge amount and a second flow meter for obtaining a value of the gas discharge amount, the facility being characterized by further comprising a control system that is configured to control the adjustment mechanism based on the value obtained by the pressure gauge to cause the supply amount and the discharge amount to and from the circulation gas to be balanced therebetween so as to set the pressure inside the cooling tower constant during a normal running operation with the furnace top lid set closed, and is configured to control the adjustment mechanism based on the values obtained by the first flow meter and the second flow meter so as to cause the discharge amount to be larger than the supply amount in the circulation gas so that the supply amount and the discharge amount to and from the circulation gas are off-balanced during a charging operation of the red-hot coke into the cooling tower with the furnace top lid set open, wherein, in use, during the charging operation of the red-hot coke, the control system is configured to control the valve so that a flow rate of the part of the cooling gas discharged by the cooling gas discharge mechanism is set constant, and is configured to control the flow rate adjustment valve for controlling the air injection amount so that an air injection flow rate from the air injection mechanism is set smaller than that of the normal running operation to decrease the supply amount to the circulation gas.

According to a second aspect of the present invention, there is provided a running operation method for a coke dry quenching facility, which comprises: a cooling tower including a charge port for charging the red-hot coke on an upper side of the cooling tower and a pressure gauge disposed at the upper side of the cooling tower to obtain a value of pressure inside the cooling tower, the cooling tower being configured to cool the red-hot coke charged therein; a furnace top lid configured to open and close the charge port; a gas circulation passage configured for gas including cooling gas to be circulated, the gas circulation passage including a cooling gas flow passage, through which the cooling gas flows toward the cooling tower, and a high temperature gas flow passage, through which high temperature gas flows, the high temperature gas being generated by heat exchange of the cooling gas with the red-hot coke inside the cooling tower; a circulation mechanism configured to circulate the gas through the gas circulation passage; a waste heat recovery boiler disposed in the gas circulation passage and configured to recover heat of the cooling gas having a high temperature due to heat exchange with the red-hot coke; and an adjustment mechanism configured to adjust a supply amount and a discharge amount to and from circulation gas circulated through the cooling tower and the gas circulation passage, the adjustment mechanism including an air injection mechanism configured to inject air into the high temperature gas flow passage to burn combustible components of the high temperature gas and thereby further increase temperature of the high temperature gas, and a cooling gas discharge mechanism configured to discharge part of the cooling gas from the cooling gas flow passage of the gas circulation passage, wherein the air injection mechanism is provided with a flow rate adjustment valve for controlling air injection amount and a first flow meter for obtaining a value of the air injection amount, and the cooling gas discharge mechanism is provided with a valve for adjusting gas discharge amount and a second flow meter for obtaining a value of the gas discharge amount, the method being characterized by comprising: performing a normal running operation with the furnace top lid set closed while controlling the adjustment mechanism based on the value obtained by the pressure gauge to cause the supply amount and the discharge amount to and from the circulation gas to be balanced therebetween so as to set the pressure inside the cooling tower constant; and performing a charging operation of the red-hot coke into the cooling tower with the furnace top lid set open while controlling the adjustment mechanism based on the values obtained by the first flow meter and the second flow meter so as to cause the discharge amount to be larger than the supply amount in the circulation gas so that the supply amount and the discharge amount to and from the circulation gas are off-balanced; and during the charging operation of the red-hot coke, controlling the valve so that a flow rate of the part of the cooling gas discharged by the cooling gas discharge mechanism is set constant, and controlling the flow rate adjustment valve for controlling the air injection amount so that an air injection flow rate from the air injection mechanism is set smaller than that of the normal running operation to decrease the supply amount to the circulation gas.

In the present invention, it is preferable to set the discharge amount and the supply amount in the circulation gas to differ from each other by an amount corresponding to a volume velocity of the red-hot coke to be charged during the charging operation of the red-hot coke.

The facility preferably further comprises a bypass duct connecting a top portion of the cooling tower to the high temperature gas flow passage, so as to supply air, sucked in through the charge port of the cooling tower, into the gas discharge section during the charging operation of the red-hot coke.

### [Brief Description of Drawings]

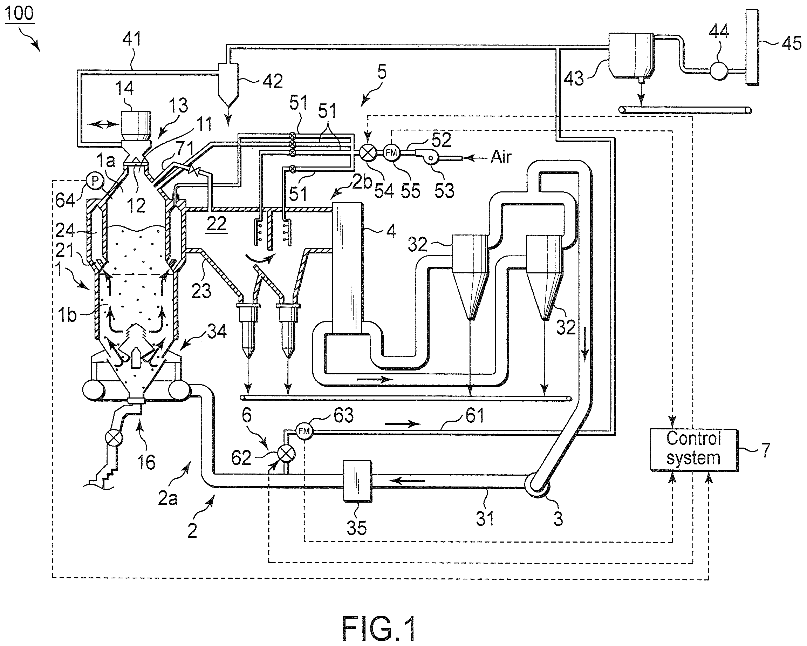

[FIG. 1] This is a schematic constitutive view showing a coke dry quenching facility according to an embodiment of the present invention.

### [Embodiment for Carrying Out the Invention]

An embodiment of the present invention will now be described with reference to the accompanying drawings.

FIG. 1 is a schematic constitutive view showing a coke dry quenching facility (CDQ) according to an embodiment of the present invention.

This coke dry quenching facility (CDQ) 100 includes a cooling tower 1 into which red-hot coke is charged, a gas circulation section 2, and a waste heat recovery boiler 4. The gas circulation section 2 is configured to supply cooling gas into the cooling tower 1 from the lower side of the cooling tower 1, and to discharge and circulate high temperature gas from the cooling tower 1, wherein the high temperature gas is generated by heat exchange of the cooling gas with the red-hot coke inside the cooling tower 1. The waste heat recovery boiler 4 is configured to recover as steam the sensible heat and latent heat of the high temperature gas discharged from the cooling tower 1.

The cooling tower 1 is formed of a preparatory chamber 1a on the upper side and a cooling chamber 1b on the lower side. The preparatory chamber 1a has a charge port 11 formed at the top, through which red-hot coke carried from a coke furnace is charged, and a furnace top lid 12 disposed to open and close the charge port 11. The charge port 11 is equipped with a charging device 13 including a hopper or the like. A bucket 14 that contains the red-hot coke is conveyed by a crane or the like onto the charging device 13. The red-hot coke inside the bucket 14 is charged into the cooling tower 1 through the charge port 11 by the charging device 13.

The charging device 13 is connected to a dust collection duct 41, which is in turn connected to a cyclone 42, a dust collector 43 including a bug filter, and a gas exhaust fan 44. The dust collection duct 41 is connected at its end to a chimney stack 45 for releasing to the atmosphere the exhaust gas that has been subjected to dust removal in the cyclone 42 and the dust collector 43.

The red-hot coke is supplied from the preparatory chamber 1a into the cooling chamber 1b, while the cooling gas is fed upward from the lower side of the cooling chamber 1b, so that the coke inside the cooling chamber 1b is cooled by this cooling gas. The cooling chamber 1b is equipped with a discharging device 16 at the bottom to continuously discharge the cooled coke.

The gas circulation section 2 includes a cooling gas flow section 2a through which the cooling gas flows, a high temperature gas flow section 2b through which the high temperature gas generated by heat exchange of the cooling gas with the red-hot coke flows, and a circulation fan 3 for circulating gas.

The high temperature gas flow section 2b includes an annulus channel 24 formed of a circular tube on the sidewall of the preparatory chamber 1a and configured to allow the high temperature gas to flow into it after heat exchange with the red-hot coke. The high temperature gas flow section 2b further includes a primary dust catcher 23 connected to the annulus channel 24 and forming a flow path 22 for guiding the high temperature gas to the waste heat recovery boiler 4. In the cooling tower 1, the high temperature gas generated by heat exchange of the cooling gas with the red-hot coke flows out through a flue 21 into the annulus channel 24. A bypass duct 71 is disposed to connect the top portion of the cooling tower 1 to the primary dust catcher 23.

The cooling gas flow section 2a includes a cooling gas piping line 31 for supplying, as the cooling gas, a gas that has been subjected to the waste heat recovery in the waste heat recovery boiler 4. The cooling gas flow section 2a further includes a cyclone 32 serving as a secondary dust catcher disposed on the cooling gas piping line 31, and a cooling gas feeding mechanism 34 for feeding the cooling gas upward from the cooling gas piping line 31 into the lower side of the cooling chamber 1b of the cooling tower 1. The circulation fan 3 mentioned above is disposed on the cooling gas piping line 31. The cooling gas piping line 31 may be equipped with a gas cooler 35.

The flow path 22 formed inside the primary dust catcher 23 of the high temperature gas flow section 2b described above serves as a high temperature gas flow passage. The cooling gas piping line 31 of the cooling gas flow section 2a described above serves as a cooling gas flow passage. They form a gas circulation passage to circulate a predetermined amount of gas through this gas circulation passage and the cooling tower 1.

The waste heat recovery boiler 4 includes heat transfer tubes (not shown) in which water flows, so that the water flowing through the heat transfer tubes is heated by the high temperature gas from the flow path 22 and is turned into steam. Then, the steam thus generated is supplied to a steam turbine or the like and is effectively utilized there.

The coke dry quenching facility 100 further includes an air injection mechanism 5 for injecting air into the high temperature gas generated by heat exchange of the cooling gas with the red-hot coke, and a gas discharge mechanism 6 for discharging part of the cooling gas to be supplied into the cooling tower 1. These mechanisms serve to an adjustment mechanism for adjusting the supply amount and discharge amount to and from the circulation gas circulated through the gas circulation passage.

When being charged into the cooling tower 1, the red-hot coke has a high temperature of about 1,000°C and includes components that have not been dry-distilled (volatile components), which are turned into flammable gases, such as hydrogen and methane, and supplied into the circulation gas flowing through the gas circulation passage. In light of this, the air injection mechanism 5 is configured to supply air into the high temperature gas generated by heat exchange of the cooling gas with the red-hot coke to burn the flammable gases described above, thereby further increasing its temperature. In this way, the high temperature gas having a temperature of, e.g., 900 to 1,000°C is supplied to the waste heat recovery boiler 4 to increase the steam generation efficiency. The air injection mechanism 5 includes a plurality of air injection piping lines 51 connected to the annulus channel 24, the flow path 22 of the primary dust catcher 23, and the preparatory chamber 1a. These piping lines 51 are collectively connected to a piping line 52 equipped with an air blowing fan 53. The air blowing fan 53 blows air through the piping lines 51 into the cooling gas having a high temperature flowing to the cooling gas flow section 2a. The piping line 52 is equipped with a flow rate adjustment valve 54 and a flow meter 55, so that the opening degree of the flow rate adjustment valve 54 can be adjusted with reference to values obtained by the flow meter 55 to control the air injection amount as a whole. Further, the piping lines 51 are configured to respectively adjust their flow rates, so that the air distribution ratio between the piping lines 51 can be adjusted.

The gas discharge mechanism 6 is used to discharge from the system a surplus amount of the circulation gas, which has been increased by gas generated from the red-hot coke and the air injection. The gas discharge mechanism 6 includes a gas discharge piping line 61 connected to the cooling gas piping line 31 at a position downstream from the circulation fan 3. The gas discharge piping line 61 is equipped with a valve 62 and a flow meter 63, so that the gas discharge amount can be adjusted by the valve 62 with reference to values obtained by the flow meter 63. On the other hand, a pressure gauge 64 is disposed at the upper side of the cooling tower 1, so that the valve 62 can be adjusted with reference to values obtained by the pressure gauge 64 to adjust the pressure inside the cooling tower 1. Accordingly, the valve 62 provides both the functions of a flow rate adjustment valve and a pressure adjustment valve. The valve 62 serves as the pressure adjustment valve during the normal running operation (the furnace top lid 12 is set closed), and it serves as the flow rate adjustment valve during the coke charging operation (the furnace top lid 12 is set open). The gas discharge piping line 61 is connected to the dust collection duct 41, so that part of the cooling gas discharged to the gas discharge piping line 61 is subjected to dust collection in the dust collector 43 and then is released to the atmosphere.

The coke dry quenching facility 100 further includes a control system 7. During the normal running operation with the furnace top lid 12 set closed, the control system 7 controls the supply amount and discharge amount to and from the circulation gas to be balanced therebetween, while the circulation gas is circulated through the cooling tower 1 and the gas circulation passage. On the other hand, during the coke charging operation with the furnace top lid 12 set open, the control system 7 controls the discharge amount from the circulation gas to be larger than the supply amount to the circulation gas, while the circulation gas is circulated through the cooling tower 1 and the gas circulation passage. Consequently, air is sucked in through the charge port 11 by that much corresponding to the off-balanced part between the supply amount and discharge amount in the circulation gas, and thereby prevents dust emission during the coke charging operation. In order to control the discharge amount from the circulation gas to be larger than the gas supply amount to the circulation gas, the discharge amount from the circulation gas is increased or the supply amount to the circulation gas is decreased, or both of these operations are performed. The difference between the discharge amount and supply amount in the circulation gas at this time is preferably set to be an amount corresponding to the volume velocity of the coke to be charged. In this way, the dust amount emitted through the coke charge port 11 during the coke charging operation becomes almost zero.

The control system 7 mainly controls the air injection mechanism 5 and the gas discharge mechanism 6, specifically as follows: During the normal running operation with the furnace top lid 12 set closed, the control system 7 controls the flow rate adjustment valve 54 to cause the air injection amount from the air injection mechanism 5 to be a predetermined amount. Further, the control system 7 makes the valve 62 serve as a pressure adjustment valve to set the pressure inside the cooling tower 1 constant by controlling gas discharged through the gas discharge piping line 61, so that the supply amount and discharge amount to and from the circulation gas are balanced therebetween. On the other hand, during the coke charging operation with the furnace top lid 12 set open, the control system 7 makes the valve 62 serve as a flow rate adjustment valve to control the gas discharge amount by the gas discharge mechanism 6 to be larger than that of the normal running operation. Consequently, the discharge amount from the circulation gas is increased and air is thereby sucked in through the charge port 11 at a predetermined flow rate. In addition, the control system 7 may control the air injection flow rate from the air injection mechanism 5 to be smaller than that of the normal running operation. In this case, the supply amount to the circulation gas is decreased, and so the supply amount and discharge amount to and from the circulation gas are off-balanced therebetween, as in a case where the discharge amount by the gas discharge mechanism 6 is set larger to increase the discharge amount from the circulation gas. Consequently, air is sucked in through the charge port 11 by that much corresponding to the decrease in the air injection amount. As described above, the control may be made such that not only the gas discharge amount is set larger than that of the normal running operation but also the air injection flow rate from the air injection mechanism 5 is set smaller than that of the normal running operation. In this case, since the discharge flow rate by the gas discharge mechanism 6 is decreased, the burden of the dust collector 43 is reduced. As a matter of course, the air injection flow rate from the air injection mechanism 5 may be solely decreased, while the valve 62 of the gas discharge mechanism 6 is set constant in terms of the flow rate or the opening degree, to decrease the supply amount to the circulation gas, so that air is sucked in through the charge port 11.

When the coke is charged, the control system 7 preferably starts controlling the balance between the supply amount and discharge amount to and from the circulation gas immediately after the furnace top lid 12 is opened. This is so because the charge port 11 is normally sealed by water sealing, and, if an excessive negative pressure is applied while the furnace top lid 12 is still closed, water may come into the cooling tower 1. Further, the necessary operation of the control system 7 can be sufficiently performed in a period from a time point when the furnace top lid 12 is opened to a time point when the coke is charged. When the furnace top lid 12 is opened, air is effectively sucked in through the charge port 11. Immediately before the furnace top lid 12 is closed after the coke charging operation is finished, the control is returned to that used for the running operation.

Next, an explanation will be give of an operation of the coke dry quenching facility 100 having the structure described above.

During the running operation, the cooling tower 1 contains red-hot coke charged therein, with the furnace top lid 12 hermetically closed, while the cooling gas is continuously supplied upward to the coke inside the cooling chamber 1b from the cooling gas feeding mechanism 34 disposed on the lower side of the cooling chamber 1b. The coke thereby cooled is continuously discharged by the discharging device 16.

The cooling gas supplied in the cooling chamber 1b flows upward through the red-hot coke and is subjected to heat exchange with the red-hot coke. The cooling gas is turned into high temperature gas by the heat exchange with the red-hot coke. The high temperature gas is guided to the waste heat recovery boiler 4 through the annulus channel 24 of the high temperature gas flow section 2b and the flow path 22 of the primary dust catcher 23 in the gas circulation section 2. Air is injected from the piping lines 51 of the air injection mechanism 5 into the preparatory chamber 1a, the annulus channel 24 of the cooling gas flow section 2a, and the primary dust catcher 23, so that the high temperature gas generated by heat exchange of the cooling gas with the red-hot coke and containing combustible components is burnt and turned into high temperature gas having a temperature of, e.g., 900 to 1,000°C. Consequently, the steam generation amount in the waste heat recovery boiler 4 is increased, and the steam generation efficiency is thereby improved.

The waste heat recovery boiler 4 is configured to generate steam by use of the sensible heat and latent heat of the high temperature gas, and to supply this steam to a steam turbine or the like. The temperature of the gas is lowered by the waste heat recovery in the waste heat recovery boiler 4. Then, the gas is sent again as the cooling gas by the circulation fan 3 toward the cooling gas piping line 31 of the cooling gas supply section 2, while the gas is subjected to dust removal in the cyclone 32 serving as the secondary dust catcher. Then, the gas is sent through the cooling piping line 31 of the cooling gas flow section 2a and is fed into the cooling tower 1 from the cooling gas feeding mechanism 34 disposed on the lower side of the cooling tower 1. The cooling gas thus being supplied may be cooled by the gas cooler 35, as needed.

In this way, during the normal running operation, the gas is circulated through the gas circulation passage comprising the flow path 22 of the primary dust catcher 23 and the cooling gas piping line 31, and the cooling tower 1. During this time, a predetermined amount of air is injected from the air injection mechanism 5 into high temperature areas of this gas circulation passage. Further, a surplus amount of the cooling gas is discharged from a low temperature area of the cooling gas circulation passage through the gas discharge piping line 61. Consequently, the gas pressure inside the upper side of the cooling tower 1 is set constant, and the supply amount and discharge amount to and from the circulation gas is balanced therebetween.

Since the coke is continuously cooled and discharged through the cooling chamber 1b, the red-hot coke is continuously supplied from the preparatory chamber 1a to the cooling chamber 1b. When the red-hot coke inside the preparatory chamber 1a is decreased to a predetermined amount or less, or when a predetermined time has passed since the last charging, red-hot coke is charged into the preparatory chamber 1a. At this time, the furnace top lid 12 is opened, and the red-hot coke is charged from the bucket 14 through the charging device 13 into the preparatory chamber 1a of the cooling tower 1.

Conventionally, gas is emitted at this time from the cooling tower 1 through the charge port 11 by that much corresponding to the volume of the charged coke. Since the gas thus emitted from the cooling tower 1 is high temperature gas that is combustible and involves a large amount of powder dust, dust is generated around the charge port 11 while combustible components therein are burnt. In this case, the gas thus given a higher temperature is exhausted as it is to the dust collector 43, and so the thermal energy of the high temperature gas cannot be effectively utilized. Further, an excessive burden is applied to the dust collector 43 during the coke charging operation. This excessive burden needs to be considered in determining the performance of the dust collector 43 and thus results in an equipment investment unnecessary for the normal running operation.

According to this embodiment made in light of the problem described above, when the furnace top lid 12 is opened to change the coke, the discharge amount and supply amount to and from the circulation gas circulated through the cooling tower 1 and gas circulation passage are controlled to be off-balanced therebetween such that the discharge amount is larger than the supply amount.

Specifically, during the normal running operation with the furnace top lid 12 set closed, the flow rate adjustment valve 54 is controlled to cause the air injection amount from the air injection mechanism 5 to be a predetermined amount. Further, the valve 62 is made to serve as a pressure adjustment valve to set the pressure inside the cooling tower 1 constant by controlling gas discharged through the gas discharge piping line 61, so that the supply amount and discharge amount to and from the circulation gas are balanced therebetween. On the other hand, during the coke charging operation with the furnace top lid 12 set open, the valve 62 is made to serve as a flow rate adjustment valve to control the gas discharge amount by the gas discharge mechanism 6 to be larger than that of the normal running operation. Consequently, the discharge amount from the circulation gas is increased to intentionally cause the supply amount and discharge amount to and from the circulation gas to be off-balanced therebetween, so that air is sucked in through the charge port at a predetermined flow rate. At this time, in addition, the air injection flow rate from the air injection mechanism 5 may be controlled to be smaller than that of the normal running operation. In this case, since the furnace top lid 12 is set open, the air injected to the preparatory chamber 1a should be preferentially stopped. If the air injection flow rate is set smaller than that of the normal running operation as described above, the supply amount to the circulation gas is decreased, and so the supply amount and discharge amount to and from the circulation gas are off-balanced therebetween, as in a case where the discharge amount by the gas discharge mechanism 6 is set larger to increase the discharge amount from the circulation gas. Consequently, air is sucked in through the charge port 11 by that much corresponding to the decrease in the air injection amount. In this case, since the discharge amount by the gas discharge mechanism 6 is decreased, the burden of the dust collector 43 is reduced. The air injection flow rate from the air injection mechanism 5 may be solely decreased, while the valve 62 of the gas discharge mechanism 6 is set constant in terms of the flow rate or the opening degree, to decrease the supply amount to the circulation gas, so that air is sucked in through the charge port 11.

As described above, according to this embodiment, the supply amount and discharge amount to and from the circulation gas are set balanced therebetween during the normal running operation with the furnace top lid 12 set closed. When the furnace top lid 12 is opened to change the coke, the discharge amount is set larger than the supply amount in the circulation gas. Consequently, air is sucked in through the charge port 11 by that much corresponding the off-balanced part between the supply amount and discharge amount in the circulation gas, and it restrains gas emission itself through the charge port 11 and thereby ultimately prevents dust emission by rooting out its generation source. The difference between the discharge amount and supply amount in the circulation gas at this time is preferably set to be an amount corresponding to the volume velocity of the coke to be charged. In this way, the gas amount emitted through the coke charge port 11 during the coke charging operation becomes almost zero. Further, since the gas emission from the cooling tower 1 itself is restrained during the coke charging operation, the total heat recovery efficiency of the CDQ increases by preventing the high temperature gas from being exhausted without thermal recovery. In addition, since the gas emission is restrained during the coke charging operation, the performance required to the dust collector is almost unchanged also in the period with the furnace top lid 12 set open, and so there is no need to prepare an additional single-purpose dust collector as in the Patent Document 1 described above.

Further, since the bypass duct 71 is disposed, when air is sucked into the cooling tower 1 through the charge port 11, the air thus sucked in is supplied through the bypass duct 71 to the primary dust catcher 23 of the gas flow section 2a. Consequently, the air thus sucked in is prevented from burning the red-hot coke inside the preparatory chamber 1a. In this respect, if the supply amount from the air injection mechanism 5 is decreased while the flow rate through the gas discharge mechanism 6 is set constant, air enters through the charge port 11 by that much corresponding to the decreased air amount. At this time, even if the air injection into the preparatory chamber 1a is set stopped, as described above, part of the air thus entering as mentioned above burns flammable gases inside the preparatory chamber 1a, and is then exhausted through the bypass duct 71 into the primary dust catcher 23. Further, part of the air entering through the charge port 11, which does not contribute to the burning inside the preparatory chamber 1a, flows through the bypass duct 71 into the primary dust catcher 23 and serves to burn combustible components of the circulation gas inside the primary dust catcher 23. As a result, the burning made in front of the waste heat recovery boiler 4 is kept equal to that obtained before the supply amount of the air injection mechanism 5 is decreased. This makes it possible to stably run the waste heat recovery boiler 4, i.e., to efficiency operate it.

As described above, according to this embodiment, during the normal running operation with the furnace top lid set closed, the supply amount and discharge amount to and from the circulation gas are balanced therebetween. On the other hand, during the charging operation of the red-hot coke into the cooling tower with the furnace top lid set open, the discharge amount is set larger than the supply amount in the circulation gas to cause the supply amount and discharge amount to be off-balanced therebetween. Consequently, while the furnace top lid is set open, air is sucked in through the charge port by that much corresponding to the difference between the discharge amount and supply amount. This makes it possible to restrain gas emission through the charge port during the coke charging operation and thereby fundamentally prevent dust emission during the coke charging operation.

The present invention is not limited to the embodiment described above.

Further, in the embodiment described above, the flow rate of the circulation gas is controlled by use of the control system during the coke charging operation and during the normal running operation. Alternatively, the flow rate of the circulation gas may be controlled by an operation of an operator.

Further, the present invention does not necessary need to comprise all the structural elements of the embodiment described above. The present invention should be construed to cover an arrangement made by omitting part of the structural elements of the embodiment described above, as long as it does not depart from the scope of the present invention as defined in the claims.

### [Reference Signs List]

1 = cooling tower, 1a = preparatory chamber, 1b = cooling chamber, 2 = gas circulation section, 2a = cooling gas flow section, 2b = high temperature gas flow section, 3 = circulation fan, 4 = waste heat recovery boiler, 5 = air injection mechanism, 6 = gas discharge mechanism, 7 = control system, 11 = charge port, 12 = furnace top lid, 13 = charging device, 16 = discharging device, 21 = flue, 22 = flow path, 23 = primary dust catcher, 24 = annulus channel, 31 = cooling gas piping line, 32 = cyclone (secondary dust catcher), 34 = cooling gas feeding mechanism, 35 = gas cooler, 41 = dust collection duct, 43 = dust collector, 51, 52 = piping line, 53 = fan, 54 = flow rate adjustment valve, 55 = flow meter, 61 = gas discharge piping line, 62 = valve, 63 = flow meter, 64 = pressure gauge, 71 = bypass duct, and 100 = coke dry quenching facility (CDQ).

## Claims

1. A coke dry quenching facility (100) for cooling, by use of cooling gas, red-hot coke manufactured by a coke furnace, the facility comprising:
a cooling tower (1) including a charge port (11) for charging the red-hot coke on an upper side of the cooling tower (1) and a pressure gauge (64) disposed at the upper side of the cooling tower (1) to obtain a value of pressure inside the cooling tower (1), the cooling tower (1) being configured to cool the red-hot coke charged therein;
a furnace top lid (12) configured to open and close the charge port (11);
a gas circulation passage (31, 22) configured for gas including the cooling gas to be circulated, the gas circulation passage (31, 22) including a cooling gas flow passage (31), through which the cooling gas flows toward the cooling tower (1), and a high temperature gas flow passage (22), through which high temperature gas flows, the high temperature gas being generated by heat exchange of the cooling gas with the red-hot coke inside the cooling tower (1);
a circulation mechanism (3) configured to circulate the gas through the gas circulation passage (31, 22);
a waste heat recovery boiler (4) disposed in the gas circulation passage (31, 22) and configured to recover heat of the cooling gas having a high temperature due to heat exchange with the red-hot coke; and
an adjustment mechanism (5, 6) configured to adjust a supply amount and a discharge amount to and from circulation gas circulated through the cooling tower (1) and the gas circulation passage (31, 22), the adjustment mechanism (5, 6) including an air injection mechanism (5) configured to inject air into the high temperature gas flow passage (22) to burn combustible components of the high temperature gas and thereby further increase temperature of the high temperature gas, and a cooling gas discharge mechanism (6) configured to discharge part of the cooling gas from the cooling gas flow passage (31) of the gas circulation passage (31, 22), wherein the air injection mechanism (5) is provided with a flow rate adjustment valve (54) for controlling air injection amount and a first flow meter (55) for obtaining a value of the air injection amount, and the cooling gas discharge mechanism (6) is provided with a valve (62) for adjusting gas discharge amount and a second flow meter (63) for obtaining a value of the gas discharge amount, the facility being **characterized by** further comprising
a control system (7) that is configured to control the adjustment mechanism (5, 6) based on the value obtained by the pressure gauge (64) to cause the supply amount and the discharge amount to and from the circulation gas to be balanced therebetween so as to set the pressure inside the cooling tower (1) constant during a normal running operation with the furnace top lid (12) set closed, and is configured to control the adjustment mechanism (5, 6) based on the values obtained by the first flow meter (55) and the second flow meter (63) so as to cause the discharge amount to be larger than the supply amount in the circulation gas so that the supply amount and the discharge amount to and from the circulation gas are off-balanced during a charging operation of the red-hot coke into the cooling tower (1) with the furnace top lid (12) set open, wherein,
in use, during the charging operation of the red-hot coke, the control system (7) is configured to control the valve (62) so that a flow rate of the part of the cooling gas discharged by the cooling gas discharge mechanism (6) is set constant, and is configured to control the flow rate adjustment valve (54) for controlling the air injection amount so that an air injection flow rate from the air injection mechanism (5) is set smaller than that of the normal running operation to decrease the supply amount to the circulation gas.

2. The coke dry quenching facility (100) according to claim 1, wherein the control system (7) is configured to control the discharge amount and the supply amount in the circulation gas to differ from each other by an amount corresponding to a volume velocity of the red-hot coke to be charged during the charging operation of the red-hot coke.

3. The coke dry quenching facility (100) according to claim 1 or 2, wherein the facility further comprises a bypass duct (71) connecting a top portion of the cooling tower (1) to the high temperature gas flow passage (22).

4. A running operation method for a coke dry quenching facility (100), which comprises: a cooling tower (1) including a charge port (11) for charging the red-hot coke on an upper side of the cooling tower (1) and a pressure gauge (64) disposed at the upper side of the cooling tower (1) to obtain a value of pressure inside the cooling tower (1), the cooling tower (1) being configured to cool the red-hot coke charged therein; a furnace top lid (12) configured to open and close the charge port (11); a gas circulation passage (31, 22) configured for gas including cooling gas to be circulated, the gas circulation passage (31, 22) including a cooling gas flow passage (31), through which the cooling gas flows toward the cooling tower (1), and a high temperature gas flow passage (22), through which high temperature gas flows, the high temperature gas being generated by heat exchange of the cooling gas with the red-hot coke inside the cooling tower (1); a circulation mechanism (3) configured to circulate the gas through the gas circulation passage (31, 22); a waste heat recovery boiler (4) disposed in the gas circulation passage (31, 22) and configured to recover heat of the cooling gas having a high temperature due to heat exchange with the red-hot coke; and an adjustment mechanism (5, 6) configured to adjust a supply amount and a discharge amount to and from circulation gas circulated through the cooling tower (1) and the gas circulation passage (31, 22), the adjustment mechanism (5, 6) including an air injection mechanism (5) configured to inject air into the high temperature gas flow passage (22) to burn combustible components of the high temperature gas and thereby further increase temperature of the high temperature gas, and a cooling gas discharge mechanism (6) configured to discharge part of the cooling gas from the cooling gas flow passage (31) of the gas circulation passage (31, 22), wherein the air injection mechanism (5) is provided with a flow rate adjustment valve (54) for controlling air injection amount and a first flow meter (55) for obtaining a value of the air injection amount, and the cooling gas discharge mechanism (6) is provided with a valve (62) for adjusting gas discharge amount and a second flow meter (63) for obtaining a value of the gas discharge amount, the method being **characterized by** comprising:
performing a normal running operation with the furnace top lid (12) set closed while controlling the adjustment mechanism (5, 6) based on the value obtained by the pressure gauge (64) to cause the supply amount and the discharge amount to and from the circulation gas to be balanced therebetween so as to set the pressure inside the cooling tower (1) constant; and
performing a charging operation of the red-hot coke into the cooling tower with the furnace top lid (12) set open while controlling the adjustment mechanism (5, 6) based on the values obtained by the first flow meter (55) and the second flow meter (63) so as to cause the discharge amount to be larger than the supply amount in the circulation gas so that the supply amount and the discharge amount to and from the circulation gas are off-balanced; and
during the charging operation of the red-hot coke, controlling the valve (62) so that a flow rate of the part of the cooling gas discharged by the cooling gas discharge mechanism (6) is set constant, and controlling the flow rate adjustment valve (54) for controlling the air injection amount so that an air injection flow rate from the air injection mechanism (5) is set smaller than that of the normal running operation to decrease the supply amount to the circulation gas.

5. The running operation method for a coke dry quenching facility (100) according to claim 4, wherein the method sets the discharge amount and the supply amount in the circulation gas to differ from each other by an amount corresponding to a volume velocity of the red-hot coke to be charged during the charging operation of the red-hot coke.

6. The running operation method for a coke dry quenching facility (100) according to claim 4 or 5, wherein the coke dry quenching facility (100) further comprises a bypass duct (71) connecting a top portion of the cooling tower (1) to the high temperature gas flow passage (22), and the method supplies air, sucked in through the charge port (11) of the cooling tower (1), into the high temperature gas flow passage (22) through the bypass duct (71) during the charging operation of the red-hot coke.

## Patentansprüche

1. Koks-Trockenlöscheinrichtung (100) zur Kühlung von glühendem Koks, der in einem Koksofen hergestellt wird, unter Verwendung von Kühlgas, wobei die Einrichtung Folgendes umfasst:
einen Kühlturm (1), der eine Beschickungsöffnung (11) zum Beschicken des glühenden Kokses auf einer Oberseite des Kühlturms (1) und ein an der Oberseite des Kühlturms (1) vorhandenes Manometer (64) enthält, um einen Druckwert innerhalb des Kühlturms (1) zu erhalten, wobei der Kühlturm (1) konfiguriert ist, um den darin beschickten glühenden Koks abzukühlen;
einen oberen Ofendeckel (12), der konfiguriert ist, um die Beschickungsöffnung (11) zu öffnen und zu schließen;
eine Gaszirkulationsleitung (31, 22), die für Gas konfiguriert ist, das das zu zirkulierende Kühlgas enthält, wobei die Gaszirkulationsleitung (31, 22) eine Kühlgasströmungsleitung (31) enthält, durch die das Kühlgas zu dem Kühlturm strömt (1) und eine Hochtemperaturgasströmungsleitung (22), durch die Hochtemperaturgas strömt, wobei das Hochtemperaturgas durch Wärmeaustausch des Kühlgases mit dem glühenden Koks innerhalb des Kühlturms (1) erzeugt wird;
einen Zirkulationsmechanismus (3), der konfiguriert ist, um das Gas durch die Gaszirkulationsleitung (31, 22) zu zirkulieren;
einen Abwärmerückgewinnungskessel (4), der in der Gaszirkulationsleitung (31, 22) angeordnet und konfiguriert ist, um die Wärme von dem Kühlgas, das, aufgrund von Wärmeaustausch mit dem glühenden Koks eine hohe Temperatur aufweist, zurückgewinnt; und
einen Anpassungsmechanismus (5, 6), der konfiguriert ist, um eine Zufuhrmenge und eine Abgabemenge zu und von Zirkulationsgas anzupassen, das durch den Kühlturm (1) und die Gaszirkulationsleitung (31, 22) zirkuliert wird, wobei der Anpassungsmechanismus (5, 6) einen Lufteinblasmechanismus (5) enthält, der konfiguriert ist, um Luft in die Hochtemperatur-Gasströmungsleitung (22) einzublasen, um brennbare Komponenten des Hochtemperaturgases zu verbrennen und dadurch die Temperatur des Hochtemperaturgases weiter zu erhöhen, und einen Kühlgasabgabemechanismus (6), der konfiguriert ist, einen Teil des Kühlgases aus der Kühlgasströmungsleitung (31) der Gaszirkulationsleitung (31, 22) abzugeben, wobei der Lufteinblasmechanismus (5) mit einem Strömungsratenanpassungsventil (54) zur Steuerung der Lufteinblasmenge und einem ersten Strömungsmesser (55) zum Erhalten eines Wertes der Lufteinblasmenge versehen ist, und der Kühlgasabgabemechanismus (6) mit einem Ventil (62) zur Anpassung der Gasabgabemenge und einem zweiten Strömungsmesser (63) zum Erhalten eines Wertes der Gasabgabemenge versehen ist, wobei die Einrichtung **dadurch gekennzeichnet ist, dass** sie weiter umfasst
ein Steuersystem (7), das konfiguriert ist, um den Anpassungsmechanismus (5, 6) basierend auf dem durch das Manometer (64) erhaltenen Wert zu steuern, um die Zufuhrmenge und die Abgabemenge zu und von dem Zirkulationsgas dazwischen auszugleichen, um den Druck innerhalb des Kühlturms (1) während eines normalen laufenden Betriebs konstant festzulegen, wobei der obere Ofendeckel (12) geschlossen gestellt ist, und konfiguriert ist, um den Anpassungsmechanismus (5, 6) basierend auf den Werten zu steuern, die durch den ersten Strömungsmesser (55) und den zweiten Strömungsmesser (63) erhalten werden, um zu bewirken, dass die Abgabemenge größer als die Zufuhrmenge in dem Zirkulationsgas ist, sodass die Zufuhrmenge und die Abgabemenge zu und von dem Zirkulationsgas während eines Beschickungsbetriebs des glühenden Kokses in den Kühlturm (1) bei offen festgelegtem Ofendeckel (12) nicht ausgeglichen sind, wobei
im Einsatz, während des Beschickungsbetriebs des glühenden Kokses das Steuersystem (7) konfiguriert ist, das Ventil (62) so zu steuern, dass eine Strömungsrate des Teils des Kühlgases, der durch den Kühlgasabgabemechanismus (6) abgegeben wird, konstant festgelegt wird und konfiguriert ist, um das Strömungsratenanpassungsventil (54) zur Steuerung der Lufteinblasmenge zu steuern, sodass eine Lufteinblasströmungsrate von dem Lufteinblasmechanismus (5) kleiner als diejenige des normalen laufenden Betriebs festgelegt wird, um die Zufuhrmenge zu dem Zirkulationsgas zu verringern.

2. Koks-Trockenlöscheinrichtung (100) nach Anspruch 1, wobei das Steuersystem (7) konfiguriert ist, um die Abgabemenge und die Zufuhrmenge in dem Zirkulationsgas so zu steuern, dass sie sich voneinander um eine Menge unterscheiden, die einer Volumengeschwindigkeit des glühenden Kokses entspricht, der während des Beschickungsbetriebs des glühenden Kokses beschickt werden soll.

3. Koks-Trockenlöscheinrichtung (100) nach Anspruch 1 oder 2, wobei die Einrichtung weiter einen Überbrückungskanal (71) umfasst, der einen oberen Abschnitt des Kühlturms (1) mit der Hochtemperatur-Gasströmungsleitung (22) verbindet.

4. Laufendes Betriebsverfahren für eine Koks-Trockenlöscheinrichtung (100), die Folgendes umfasst: einen Kühlturm (1), der eine Beschickungsöffnung (11) zum Beschicken des glühenden Kokses an einer oberen Seite des Kühlturms (1) und ein Manometer (64), das an der oberen Seite des Kühlturms (1) angeordnet ist, um einen Druckwert innerhalb des Kühlturms (1) zu erhalten, wobei der Kühlturm (1) konfiguriert ist, den darin beschickten glühenden Koks zu kühlen; einen oberen Ofendeckel (12), der konfiguriert ist, um die Beschickungsöffnung (11) zu öffnen und zu schließen; eine Gaszirkulationsleitung (31, 22), die für Gas konfiguriert ist, das das zu zirkulierende Kühlgas enthält, wobei die Gaszirkulationsleitung (31, 22) eine Kühlgasströmungsleitung (31) enthält, durch die das Kühlgas zu dem Kühlturm strömt (1) und eine Hochtemperaturgasströmungsleitung (22), durch die Hochtemperaturgas strömt, wobei das Hochtemperaturgas durch Wärmeaustausch des Kühlgases mit dem glühenden Koks innerhalb des Kühlturms (1) erzeugt wird; einen Zirkulationsmechanismus (3), der konfiguriert ist, um das Gas durch die Gaszirkulationsleitung (31, 22) zu zirkulieren; einen Abwärmerückgewinnungskessel (4), der in der Gaszirkulationsleitung (31, 22) angeordnet und so konfiguriert ist, dass er Wärme von dem Kühlgas, das, aufgrund von Wärmeaustausch mit dem glühenden Koks eine hohe Temperatur aufweist, zurückgewinnt; und einen Anpassungsmechanismus (5, 6), der konfiguriert ist, um eine Zufuhrmenge und eine Abgabemenge zu und von Zirkulationsgas anzupassen, das durch den Kühlturm (1) und die Gaszirkulationsleitung (31, 22) zirkuliert wird, wobei der Anpassungsmechanismus (5, 6) einen Lufteinblasmechanismus (5) enthält, der konfiguriert ist, um Luft in die Hochtemperatur-Gasströmungsleitung (22) einzublasen, um brennbare Komponenten des Hochtemperaturgases zu verbrennen und dadurch die Temperatur des Hochtemperaturgases weiter zu erhöhen, und einen Kühlgasabgabemechanismus (6), der konfiguriert ist, einen Teil des Kühlgases aus der Kühlgasströmungsleitung (31) der Gaszirkulationsleitung (31, 22) abzugeben, wobei der Lufteinblasmechanismus (5) mit einem Strömungsrateneinstellventil (54) zur Steuerung der Lufteinblasmenge und einem ersten Strömungsmesser (55) zum Erhalten eines Wertes der Lufteinblasmenge versehen ist, und der Kühlgasabgabemechanismus (6) mit einem Ventil (62) zur Anpassung der Gasabgabemenge und einem zweiten Strömungsmesser (63) zum Erhalten eines Wertes der Gasabgabemenge versehen ist, wobei das Verfahren **dadurch gekennzeichnet ist, dass** es Folgendes umfasst:
Ausführung eines normalen laufenden Betriebs mit geschlossen festgelegtem oberen Ofendeckel (12), während des Steuerns des Anpassungsmechanismus (5, 6) basierend auf dem Wert, der durch das Manometer (64) erhalten wird, um die Zufuhrmenge und die Abgabemenge zu und von dem Zirkulationsgas dazwischen auszugleichen, um den Druck innerhalb des Kühlturms (1) konstant festzulegen; und
Ausführung eines Beschickungsbetriebs des glühenden Kokses in den Kühlturm, wobei der obere Ofendeckel (12) auf offen festgelegt wird, während der Anpassungsmechanismus (5, 6) basierend auf den Werten gesteuert wird, die durch den ersten Strömungsmesser (55) und den zweiten Strömungsmesser (63) erhalten werden, um zu bewirken, dass die Abgabemenge in dem Zirkulationsgas größer ist, als die Zufuhrmenge, sodass die Zufuhrmenge und die Abgabemenge zu und von dem Zirkulationsgas nicht ausgeglichen sind; und
während des Beschickungsbetriebs des glühenden Kokses, Steuerung des Ventils (62), sodass eine Strömungsrate des Teils des Kühlgases, das durch den Kühlgasabgabemechanismus (6) abgegeben wird, konstant festgelegt wird, und Steuerung des Strömungsratenanpassungsventils (54) zur Steuerung der Lufteinblasmenge, sodass eine Lufteinblasströmungsrate von dem Lufteinblasmechanismus (5) kleiner als diejenige des normalen laufenden Betriebs festgelegt wird, um die Zufuhrmenge zu dem Zirkulationsgas zu verringern.

5. Laufendes Betriebsverfahren für eine Koks-Trockenlöscheinrichtung (100) nach Anspruch 4, wobei das Verfahren die Abgabemenge und die Zufuhrmenge in dem Zirkulationsgas so festlegt, dass sie sich voneinander um eine Menge unterscheiden, die einer Volumengeschwindigkeit des glühenden Kokses entspricht, der während des Beschickungsbetriebs des glühenden Kokses zu beschicken ist.

6. Laufendes Betriebsverfahren für eine Koks-Trockenlöscheinrichtung (100) nach Anspruch 4 oder 5, wobei die Koks-Trockenlöscheinrichtung (100) weiter einen Überbrückungskanal (71) umfasst, der einen oberen Abschnitt des Kühlturms (1) mit der Hochtemperatur-Gasströmungsleitung (22) verbindet, und wobei das Verfahren Luft zuführt, die durch die Beschickungsöffnung (11) des Kühlturms (1) in der Hochtemperatur-Gasströmungsleitung (22) durch den Überbrückungskanal (71) während des Beschickungsbetriebs des glühenden Kokses angesaugt wird.

## Revendications

1. Installation d'extinction à sec de coke (100) pour refroidir, en utilisant un gaz de refroidissement, un coke chauffé au rouge fabriqué par un four à coke, l'installation comprenant:
une tour d'extinction (1) incluant une ouverture de chargement (11) pour charger le coke chauffé au rouge sur un côté supérieur de la tour d'extinction (1) et un manomètre (64) disposé sur le côté supérieur de la tour d'extinction (1) pour obtenir une valeur de pression à l'intérieur de la tour d'extinction (1), la tour d'extinction (1) étant configurée pour refroidir le coke chauffé au rouge chargé à l'intérieur ;
un couvercle supérieur de four (12) configuré pour ouvrir et fermer l'ouverture de chargement (11) ;
des canaux de circulation de gaz (31, 22) configurés pour le gaz, incluant le gaz de refroidissement à mettre en circulation, les canaux de circulation de gaz (31, 22) incluant un canal de circulation de gaz de refroidissement (31), à travers lequel le gaz de refroidissement s'écoule vers la tour d'extinction (1), et un canal de circulation de gaz à haute température (22), à travers lequel s'écoule un gaz à haute température, le gaz à haute température étant généré par un échange de chaleur entre le gaz de refroidissement et le coke chauffé au rouge à l'intérieur de la tour d'extinction (1) ;
un mécanisme de circulation (3) configuré pour faire circuler le gaz à travers les canaux de circulation de gaz (31, 22) ;
une chaudière de récupération de chaleur résiduelle (4) disposée dans les canaux de circulation de gaz (31, 22) et configurée pour récupérer la chaleur du gaz de refroidissement ayant une température élevée du fait de l'échange de chaleur avec le coke chauffé au rouge ; et
des mécanismes d'ajustement (5, 6) configurés pour ajuster une quantité d'alimentation et une quantité de décharge vers et depuis le gaz de circulation circulant à travers la tour d'extinction (1) et les canaux de circulation de gaz (31, 22), les mécanismes d'ajustement (5, 6) incluant un mécanisme d'injection d'air (5) configuré pour injecter de l'air dans le canal de circulation de gaz à haute température (22) pour brûler des composants combustibles du gaz à haute température et augmenter ainsi davantage la température du gaz à haute température et un mécanisme de décharge du gaz de refroidissement (6) configuré pour décharger une partie du gaz de refroidissement provenant du canal de circulation de gaz de refroidissement (31) des canaux de circulation de gaz (31, 22), dans lequel le mécanisme d'injection d'air (5) est doté d'une soupape d'ajustement du débit (54) pour contrôler la quantité d'injection d'air et d'un premier débitmètre (55) pour obtenir une valeur de la quantité d'injection d'air, et le mécanisme de décharge du gaz de refroidissement (6) est doté d'une soupape (62) pour ajuster la quantité de décharge de gaz et d'un second débitmètre (63) pour obtenir une valeur de la quantité de décharge de gaz, l'installation étant **caractérisée en ce qu'**elle comprend en outre
un système de commande (7) qui est configuré pour commander les mécanismes d'ajustement (5, 6) sur la base de la valeur obtenue par le manomètre (64) pour permettre l'équilibrage de la quantité d'alimentation et de la quantité de décharge vers et depuis le gaz de circulation entre elles, de façon à régler la pression à l'intérieur de la tour d'extinction (1) de manière constante pendant un fonctionnement normal, avec le couvercle supérieur du four (12) réglé en fermeture, et qui est configuré pour commander les mécanismes d'ajustement (5, 6), sur la base des valeurs obtenues par le premier débitmètre (55) et le second débitmètre (63), de façon à ce que la quantité de décharge soit supérieure à la quantité d'alimentation dans le gaz de circulation de sorte que la quantité d'alimentation et la quantité de décharge vers et depuis le gaz de circulation soient déséquilibrées pendant une opération de chargement du coke chauffé au rouge dans la tour d'extinction (1) avec le couvercle supérieur du four (12) réglé en ouverture, dans lequel,
en cours d'utilisation, pendant l'opération de chargement du coke chauffé au rouge, le système de commande (7) est configuré pour commander la soupape (62) de sorte qu'un débit de la partie du gaz de refroidissement déchargé par le mécanisme de décharge de gaz de refroidissement (6) soit constant, et est configuré pour commander la soupape d'ajustement du débit (54) de façon à commander la quantité d'injection d'air de sorte qu'un débit d'injection d'air provenant du mécanisme d'injection d'air (5) soit réduit à un niveau plus faible que lors d'un fonctionnement normal, afin de diminuer la quantité d'alimentation au gaz de circulation.

2. Installation d'extinction à sec de coke (100) selon la revendication 1, dans laquelle le système de commande (7) est configuré pour commander la quantité de décharge et la quantité d'alimentation dans le gaz de circulation, afin qu'elles diffèrent l'une de l'autre d'une quantité correspondant à une vitesse de volume du coke chauffé au rouge à charger pendant l'opération de chargement dudit coke chauffé au rouge.

3. Installation d'extinction à sec de coke (100) selon la revendication 1 ou 2, dans laquelle l'installation comprend en outre un conduit de bypass (71) reliant une partie supérieure de la tour d'extinction (1) au canal de circulation de gaz à haute température (22).

4. Procédé de fonctionnement d'une installation d'extinction à sec de coke (100), qui comprend : une tour d'extinction (1) incluant un orifice de chargement (11) pour charger le coke chauffé au rouge sur un côté supérieur de la tour d'extinction (1) et un manomètre (64) disposé sur le côté supérieur de la tour d'extinction (1) pour obtenir une valeur de pression à l'intérieur de la tour d'extinction (1), la tour d'extinction (1) étant configurée pour refroidir le coke chauffé au rouge chargé à l'intérieur ; un couvercle supérieur de four (12) configuré pour ouvrir et fermer l'ouverture de chargement (11) ; des canaux de circulation de gaz (31, 22) configurés pour mettre en circulation du gaz, y compris du gaz de refroidissement, les canaux de circulation de gaz (31, 22) incluant un canal de circulation de gaz de refroidissement (31), à travers lequel le gaz de refroidissement s'écoule vers la tour d'extinction (1), et un canal de circulation de gaz à haute température (22), à travers lequel s'écoule un gaz à haute température, le gaz à haute température étant généré par un échange de chaleur du gaz de refroidissement avec le coke chauffé au rouge à l'intérieur de la tour d'extinction (1) ; un mécanisme de circulation (3) configuré pour faire circuler le gaz à travers les canaux de circulation de gaz (31, 22) ; une chaudière de récupération de chaleur résiduelle (4) disposée dans les canaux de circulation de gaz (31, 22) et configurée pour récupérer la chaleur du gaz de refroidissement ayant une température élevée du fait de l'échange de chaleur avec le coke chauffé au rouge ; et des mécanismes d'ajustement (5, 6) configurés pour ajuster une quantité d'alimentation et une quantité de décharge vers et depuis le gaz de circulation circulant à travers la tour d'extinction (1) et les canaux de circulation de gaz (31, 22), les mécanismes d'ajustement (5, 6) incluant un mécanisme d'injection d'air (5) configuré pour injecter de l'air dans le canal de circulation de gaz à haute température (22) pour brûler des composants combustibles du gaz à haute température et ainsi augmenter davantage la température du gaz à haute température, et un mécanisme de décharge de gaz de refroidissement (6) configuré pour décharger une partie du gaz de refroidissement du canal de circulation de gaz de refroidissement (31) des canaux de circulation de gaz (31, 22), dans lequel le mécanisme d'injection d'air (5) est doté d'une soupape d'ajustement de débit (54) pour contrôler la quantité d'injection d'air et d'un premier débitmètre (55) pour obtenir une valeur de la quantité d'injection d'air, et le mécanisme de décharge de gaz de refroidissement (6) est doté d'une soupape (62) pour ajuster la quantité de décharge de gaz et d'un second débitmètre (63) pour obtenir une valeur de la quantité de décharge de gaz, le procédé étant **caractérisé en ce qu'**il comprend :
la réalisation d'un fonctionnement normal avec le couvercle supérieur du four (12) réglé en fermeture tout en contrôlant les mécanismes d'ajustement (5, 6) sur la base de la valeur obtenue par le manomètre (64) afin d'équilibrer la quantité d'alimentation et la quantité de décharge vers et depuis le gaz de circulation entre elles, de façon à régler la pression à l'intérieur de la tour d'extinction (1) de manière constante ; et
la réalisation d'une opération de chargement du coke chauffé au rouge dans la tour d'extinction avec le couvercle supérieur du four (12) réglé en ouverture, tout en contrôlant les mécanismes d'ajustement (5, 6) sur la base des valeurs obtenues par le premier débitmètre (55) et le second débitmètre (63) de façon à ce que la quantité de décharge soit supérieure à la quantité d'alimentation dans le gaz de circulation de sorte que la quantité d'alimentation et la quantité de décharge vers et depuis les gaz de circulation soient déséquilibrées ; et
pendant l'opération de chargement du coke chauffé au rouge, la commande de la soupape (62) de sorte qu'un débit de la partie du gaz de refroidissement déchargé par le mécanisme de décharge du gaz de refroidissement (6) soit réglé de manière constante, et la commande de la soupape d'ajustement du débit (54) pour commander la quantité d'injection d'air de sorte qu'un débit d'injection d'air depuis le mécanisme d'injection d'air (5) soit réglé à un niveau plus faible que celui du fonctionnement normal, afin de diminuer la quantité d'alimentation au gaz de circulation.

5. Procédé de fonctionnement d'une installation d'extinction à sec de coke (100) selon la revendication 4, dans lequel le procédé règle la quantité de décharge et la quantité d'alimentation dans le gaz de circulation de sorte qu'elles diffèrent l'une de l'autre d'une quantité correspondant à une vitesse de volume du coke chauffé au rouge à charger pendant l'opération de chargement dudit coke chauffé au rouge.

6. Procédé de fonctionnement d'une installation d'extinction à sec de coke (100) selon la revendication 4 ou 5, dans lequel l'installation d'extinction à sec de coke (100) comprend en outre un conduit de bypass (71) reliant une partie supérieure de la tour d'extinction (1) au canal de circulation de gaz à haute température (22) et le procédé fournit de l'air, aspiré à travers l'ouverture de chargement (11) de la tour d'extinction (1), dans le canal de circulation de gaz à haute température (22) à travers le conduit de bypass (71) pendant l'opération de chargement du coke chauffé au rouge.
